# EUROPEAN PATENT APPLICATION

(11) **EP 4 796 961 A1**
(43) Date of publication of application: **26.08.2026**
(21) Application number: 26157842.1
(22) Date of filing: 11.02.2026
(51) Int. Cl.: G02B 5/124, G02B 27/28, G02B 30/56, G02B 5/20

(54) **DISPLAY DEVICE**

(30) Priority: 25.02.2025 JP 2025028032
(71) Applicant: Alps Alpine Co., Ltd., Ota-ku, Tokyo 145-8501 (JP)
(72) Inventor: Yuza, Shingo, Iwaki-city, Fukushima (JP)
(74) Representative: Schmitt-Nilson Schraud Waibel Wohlfrom Patentanwälte Partnerschaft mbB

(57) **Abstract**

**A display** device capable of displaying an aerial image by using retroreflection. The display device includes: a light source; a polarizing beam splitter arranged at a position on which light from the light source is incident; a retroreflecting member; a λ/4 plate arranged on a surface of the retroreflecting member; and a light attenuating filter arranged on the surface of the A/4 plate. The retroreflecting member receives light reflected by the polarizing beam splitter and transmitted through the light attenuating filter and the A/4 plate, and the polarizing beam splitter transmits light retroreflected by the retroreflecting member and transmitted through the λ/4 plate and the light attenuating filter to form the aerial image.

## Description

The present application is based on and claims priority to Japanese Patent Application No. 2025-028032 filed on February 25, 2025.

The present invention relates to a display device for displaying an aerial image by retroreflection.

Aerial imaging by retroreflection (AIRR) is known. The principle of displaying an aerial image (or aerial video) by retroreflection is that light generated from a light source is reflected by a mirror in the direction of a retroreflecting member, and a part of the glowing light returned to the mirror is transmitted through the mirror, thereby re-forming an image. Therefore, a half mirror with reduced reflectivity, a polarizing beam splitter, or the like is used for the mirror (for example, see Japanese Patent No. 7604079).

The present disclosure relates to a display device according to the appended claims. Embodiments are disclosed in the dependent claims.

A display device according to aspects of the present disclosure is capable of displaying an aerial image by using retroreflection, and includes a light source, a polarizing beam splitter arranged at a position on which light from the light source is incident, a retroreflecting member, a λ/4 plate arranged on a surface of the retroreflecting member, and a light attenuating filter arranged on the surface of the A/4 plate, wherein the retroreflecting member receives light reflected by the polarizing beam splitter and transmitted through the light attenuating filter and the λ/4 plate, and the polarizing beam splitter transmits light retroreflected by the retroreflecting member and transmitted through the λ/4 plate and the light attenuating filter to form an aerial image.

A display device according to further aspects of the present disclosure is capable of displaying an aerial image by using retroreflection, and includes a light source, a half mirror arranged at a position on which light from the light source is incident, a retroreflecting member, and a polarizing plate arranged on a surface of the retroreflecting member, wherein the retroreflecting member receives light reflected by the half mirror and transmitted through the polarizing plate, and the half mirror transmits light retroreflected by the retroreflecting member and transmitted through the polarizing plate to form an aerial image.
FIG. 1A is a diagram illustrating a schematic configuration of an existing display device for displaying an aerial image;
FIG. 1B is an exemplary diagram illustrating scattered light generated by the retroreflective member;
FIG. 2 is a diagram illustrating a schematic configuration of a display device for displaying an aerial image according to a first embodiment of the present disclosure;
FIG. 3A is a diagram for explaining how unnecessary light is reduced when a neutral density (ND) filter is disposed on a polarizing beam splitter of an existing structure;
FIG. 3B is a diagram for explaining how the unnecessary light is reduced according to the embodiments; and
FIG. 4 is a diagram illustrating a schematic configuration of a display device for displaying an aerial image according to a second embodiment of the present disclosure.

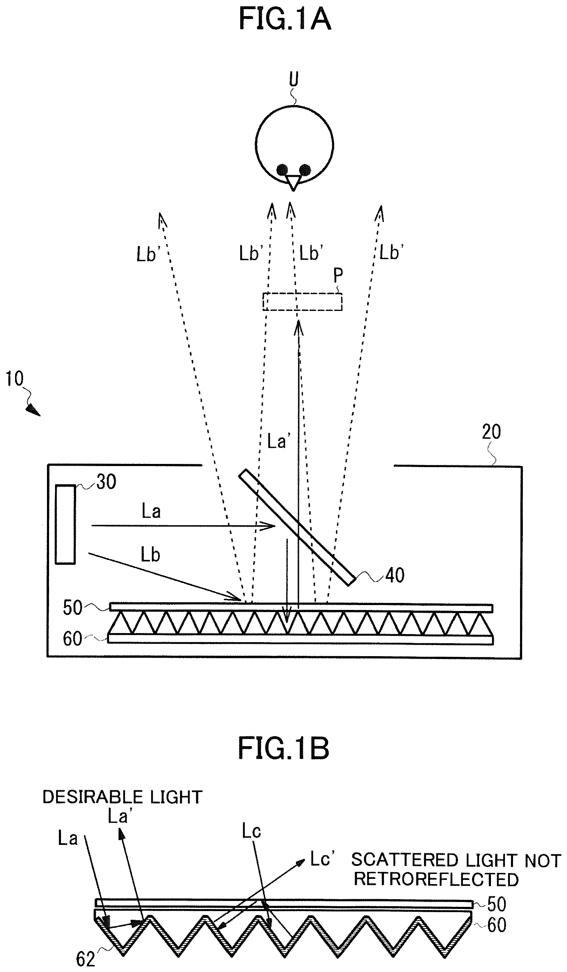

FIG. 1A is a diagram illustrating a schematic configuration of an existing display device for displaying an aerial image. A display device 10 includes, for example, a display 30, a polarizing beam splitter 40, a λ/4 plate 50, and a retroreflective member 60 in a housing 20 such as a casing.

The display 30 outputs an original video of an aerial image P, and the polarizing beam splitter 40 reflects the light of an incident original video toward the retroreflective member 60. The λ/4 plate 50 is a retardation film for generating a phase difference of λ/4, and is attached to a surface of the retroreflective member 60. The light reflected by the polarizing beam splitter 40 passes through the λ/4 plate 50 and is retroreflected by the retroreflective member 60 in the same direction as the incident light, and the retroreflected light passes through the λ/4 plate 50 again, and then passes through the polarizing beam splitter 40 to form the aerial image P.

Here, among the light output from the display 30, light La reflected by the polarizing beam splitter 40 becomes light La' passing through the optical path of the λ/4 plate 50, the retroreflective member 60, the λ/4 plate 50, and the polarizing beam splitter 40, and forms the aerial image P. In contrast to this, among the light output from the display 30 in an oblique direction, there is light Lb directly incident on the A/4 plate 50 without being incident on the polarizing beam splitter 40, and such light Lb becomes, for example, light Lb' reflected by the surface of the λ/4 plate 50 and does not contribute to the formation of the aerial image P. When such light Lb' reaches the eye of an observer U, internal structures such as the optical system in the housing appear bright, and there is an issue that the contrast of the aerial image P is lowered.

In addition, as illustrated in FIG. 1B, among light Lc passing through the A/4 plate 50 and incident on the retroreflective member 60, scattered light Lc', which repeats reflection between a reflecting portion (aluminum metal layer) 62 of the retroreflective member 60 and the A/4 plate 50 and is not retroreflected, is generated. Such scattered light Lc' is also unnecessary light that does not contribute to the formation of the aerial image P, and causes the same issue as described above. The light La exemplifies a desired retroreflected light La'.

The present disclosure provides a display device which addresses such existing issues and enhances the contrast of an aerial image by making the internal structure difficult to see.

Next, embodiments of the present disclosure will be described. A display device according to the embodiments displays an aerial image by using retroreflection while preventing the inside of a housing from appearing bright, thereby enhancing the appearance design of the display device and enhancing the visibility and brightness of the aerial image. It should be noted that the drawings referred to in the following description of the embodiments include exaggerated representations to facilitate understanding of the disclosure and do not represent the shape or scale of an actual product.

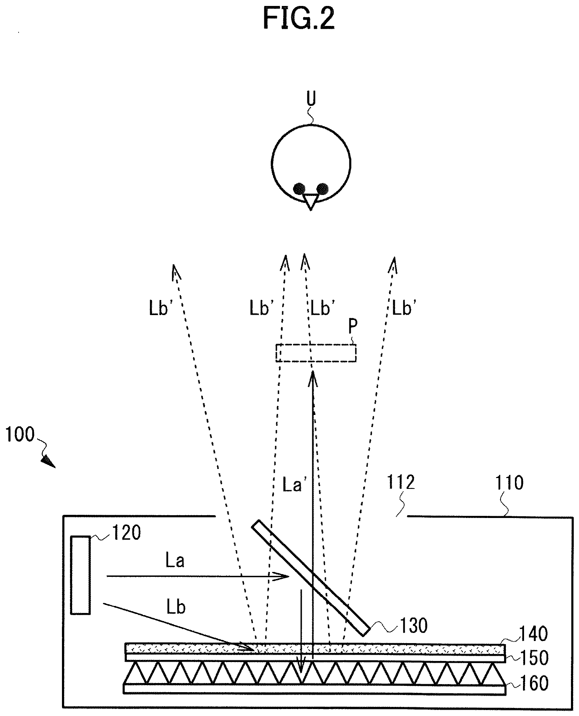

Next, embodiments of the present disclosure will be described in detail with reference to the drawings. FIG. 2 is a diagram illustrating a schematic configuration of a display device according to a first embodiment of the present disclosure. A display device 100 of the present embodiment includes a housing 110, a display 120 as a light source arranged in the housing 110, a polarizing beam splitter 130, an ND filter 140, a λ/4 plate 150, and a retroreflective member 160, and displays an aerial image P floating in the air from the housing 110.

The housing 110 is not particularly limited in shape or material, but is, for example, a rectangular housing, and accommodates optical elements such as the display 120, the polarizing beam splitter 130, and the retroreflective member 160 in its internal space. An opening or window 112 is formed on the upper surface of the housing 110 at a position facing the polarizing beam splitter 130 such that light from the polarizing beam splitter 130 passes through. The opening 112 is appropriately selected depending on the size of the aerial image P or the display 120. The opening 112 may be hollow, or the opening 112 may be covered with a cover or sheet made of a material capable of transmitting light.

The display 120 is a light source for generating an original video of the aerial image P. The display 120 is not particularly limited, but may be, for example, a light emitting diode (LED) or an organic electroluminescence (EL) display, a projector, or an LED unit in which a plurality of LEDs are 2-dimensionally arranged. In the first embodiment, the display 120 outputs generally linearly polarized light toward the polarizing beam splitter 130. The angle formed by the normal (optical axis) to the display surface of the display 120 and the principal surface of the polarizing beam splitter 130 is, for example, 45 degrees.

The polarizing beam splitter 130 selectively reflects a component of linearly polarized light oscillating in a certain direction and transmits a component orthogonal to the component of linearly polarized light. A transmission axis of the polarizing beam splitter 130 is set to reflect light received from the display 120 and to transmit light received from the retroreflective member 160.

The retroreflective member 160 is an optical element which reflects light in the same direction as the incident light, and although its configuration is not particularly limited, it may include, for example, a triangular pyramidal retroreflective element, a full-cube corner retroreflective element, or the like. The retroreflective member 160 is, for example, a rectangular sheet-like or film-like member and is disposed on the bottom surface of the housing 110.

The λ/4 plate 150 is a sheet-like or film-like optical element which generates a phase difference of λ/4 between the incident light and emitted light. The A/4 plate 150 is, for example, adhered to a retroreflective surface of the retroreflective member 160 or disposed close to the surface of the retroreflective member 160. The λ/4 plate 150 emits light converted into circularly polarized light when incident with linearly polarized light oscillating in a certain direction, or emits light converted into linearly polarized light when incident with circularly polarized light.

An ND filter 140 is a light attenuating filter which uniformly reduces incident light of all wavelengths. The ND filter 140 has substantially the same planar shape as the λ/4 plate 150, and is, for example, attached to the surface of the λ/4 plate 150 or disposed close to the surface of the λ/4 plate 150.

Next, an operation of the display device 100 will be described. The display 120 outputs an original video of the aerial image P, and the polarizing beam splitter 130 reflects the light of the original video incident from the display 120 toward the retroreflective member 160. The light reflected by the polarizing beam splitter 130 passes through the ND filter 140 to reduce the amount of light, and then passes through the A/4 plate 150 and is incident on the retroreflective member 160. The light incident on the retroreflective member 160 is retroreflected there in the same direction as the incident light, and the retroreflected light passes through the λ/4 plate 150 again, and then passes through the ND filter 140 again to reduce the amount of light. The retroreflected light passing through the ND filter 140 passes through the polarizing beam splitter 130 to form the aerial image P.

Here, among the light output from the display 120, the light La incident on the polarizing beam splitter 130 is a desirable light La' that is retroreflected by the retroreflective member 160 to form the aerial image P. In contrast to this, the light Lb output obliquely from the display 120 and incident on the A/4 plate 150 without entering the polarizing beam splitter 130 is unnecessary light that does not contribute to the formation of the aerial image P. Such light Lb passes through the ND filter 140 twice to become light Lb' whose amount of light is reduced. Since the amount of light Lb' is reduced, even when the light Lb' reaches the eyes of the observer U when the observer U observes the aerial image P, it is possible to suppress the internal structure of the housing 110 from appearing bright, thereby enhancing the contrast between the aerial image P and its background. In addition, although not shown here, scattered light generated by the retroreflective member 160 as shown in FIG. 1B is similarly attenuated by the ND filter 140, such that it is possible to suppress the internal structure of the housing 110 from appearing bright.

Although the ND filter 140 is arranged on the upper surface of the λ/4 plate 150 in the above-described embodiment, the ND filter 140 may be arranged on the lower surface (or the back surface) of the λ/4 plate 150. That is, the ND filter 140 is arranged between the λ/4 plate 150 and the retroreflective member 160. Even when the ND filter 140 is arranged on the lower surface of the A/4 plate 150, the same effect as in the above-described embodiment can be obtained, and the unwanted light Lb that does not form the aerial image P is attenuated by the ND filter 140, such that it is possible to suppress the internal structure of the housing 110 from appearing bright, thereby enhancing the contrast between the aerial image P and its background. Although the attachment method of the ND filter 140 is as desired, for example, the ND filter 140 may be attached to the front surface of the retroreflective member 160, and the λ/4 plate 150 may be attached to the front surface of the ND filter 140.

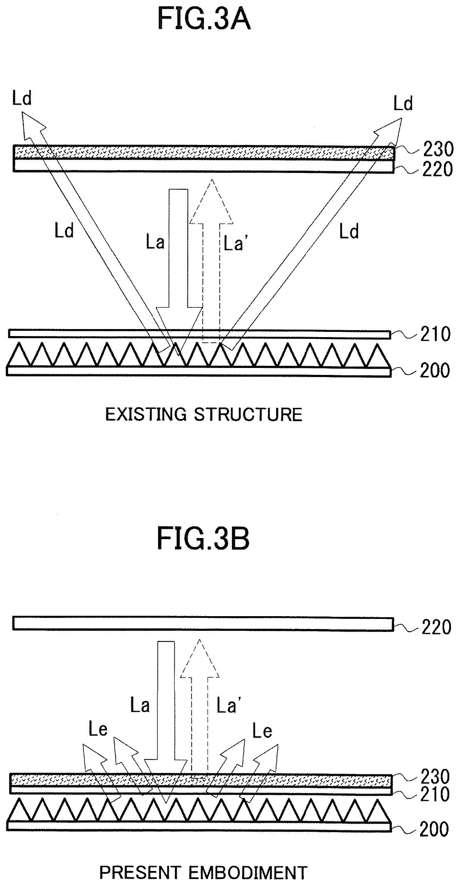

FIG. 3A is a diagram illustrating a state of attenuation of the unwanted light when the ND filter is attached to a polarizing beam splitter in an existing structure. FIG. 3B is a diagram illustrating a state of attenuation of the unwanted light when the ND filter is attached to the front surface of the λ/4 plate as in the present embodiment.

In the existing structure, a A/4 plate 210 is arranged on the surface of a retroreflective member 200, a polarizing beam splitter 220 is arranged in parallel to face the λ/4 plate 210, and an ND filter 230 is arranged on the upper surface of the polarizing beam splitter 220. The polarizing beam splitter 220 reflects light La incident from a light source (not illustrated) toward the retroreflective member 200, and the light La' retroreflected by the retroreflective member 200 passes through the polarizing beam splitter 220 and the ND filter 230 to form an aerial image. Meanwhile, unnecessary light Ld (including light scattered by the retroreflective member 200 and light reflected by the surface of the λ/4 plate 210) that does not contribute to the formation of an aerial image passes through the polarizing beam splitter 220 and the ND filter 230 and is emitted to the outside, but since the unnecessary light Ld passes through the ND filter 230 only once, the amount of light that is reduced is relatively small.

In contrast to this, in the present embodiment, by adhering the ND filter 230 to the surface of the λ/4 plate 210, unnecessary light Le that does not contribute to the formation of an aerial image from the light source passes through the ND filter 230 twice, such that the amount of light that is reduced is large, and therefore, the internal structure of the housing 110 is suppressed from appearing bright, thereby enhancing the contrast of the aerial image. As described above, when the ND filter 230 is adhered to the surface of the retroreflective member 200, the unnecessary light passes through the ND filter 230 twice, such that the unnecessary light can be further reduced as compared with the existing structure, thereby enhancing the contrast of the aerial image.

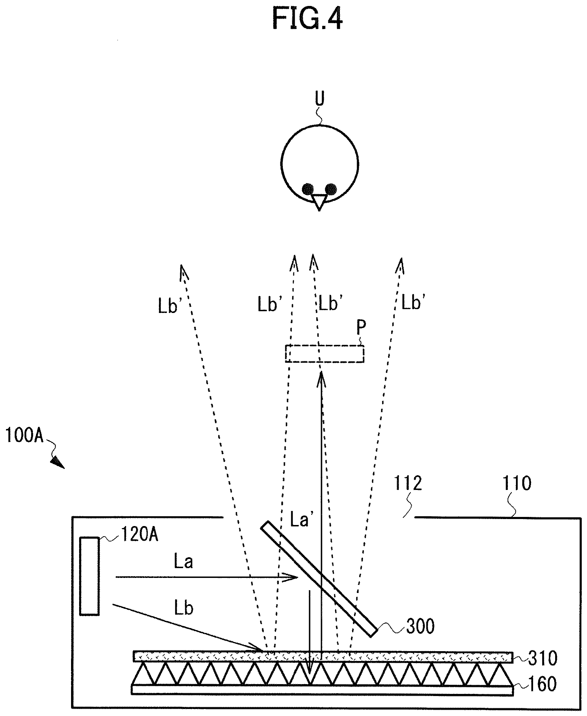

Next, a second embodiment of the present disclosure will be described. FIG. 4 is a diagram illustrating a schematic configuration of a display device according to the second embodiment, and the same reference numerals are given to the same configuration as in the first embodiment. A display device 100A of the second embodiment includes a light source 120A for outputting unpolarized light as an original video of an aerial image P, a half mirror 300 used in place of the polarizing beam splitter 130 of the first embodiment, and a polarizing plate 310 attached to the surface of a retroreflective member 160, leaving out the A/4 plate, and relates to an optical system for unpolarized light.

The half mirror 300 is an optical element for separating incident light into reflected light and transmitted light. The polarizing plate 310 is an optical element for transmitting light polarized in a specific direction. The half mirror 300 receives random light from the light source 120A and reflects part of the incident light toward the retroreflective member 160. The part of the light reflected by the half mirror 300 is incident on the retroreflective member 160 through the polarizing plate 310, and the light retroreflected by the retroreflective member 160 is incident on the half mirror 300 again through the polarizing plate 310, and the light La' transmitted through the half mirror 300 forms an image of the aerial image P.

In contrast to this, the light Lb output from the light source 120A that does not contribute to the formation of the aerial image P is, for example, incident on the retroreflective member 160 through the polarizing plate 310 without being directly incident on the half mirror 300, and scattered light is generated there. Since the amount of light Lb is reduced when the light Lb passes through the polarizing plate 310, the scattered light Lb' becomes a weak light, and the internal structure of the optical system in the housing is suppressed from appearing bright to the observer U, thereby enhancing the contrast of the aerial image P.

According to the present disclosure, since a light attenuating filter is disposed on the surface of a λ/4 plate, light that does not contribute to the formation of an aerial image from the light source is reduced, thereby suppressing a bright appearance of the internal structure, and the contrast between the aerial image and the background can be enhanced. Furthermore, according to the present disclosure, since a polarizing plate is disposed on the surface of a retroreflective member, light that does not contribute to the formation of an aerial image from the light source is reduced, thereby suppressing a bright appearance of the internal structure, and the contrast between the aerial image and the background can be enhanced.

Although preferred embodiments of the present invention have been described in detail above, the present invention is not limited to specific embodiments, and various modifications are possible within the scope of the claims.

## Claims

1. A display device capable of displaying an aerial image by using retroreflection, the display device comprising:
a light source;
a polarizing beam splitter arranged at a position on which light from the light source is incident;
a retroreflecting member;
a A/4 plate arranged on a surface of the retroreflecting member; and
a light attenuating filter arranged on the surface of the λ/4 plate, wherein
the retroreflecting member is configured to receive light reflected by the polarizing beam splitter and transmitted through the light attenuating filter and the A/4 plate, and
the polarizing beam splitter is configured to transmit light retroreflected by the retroreflecting member and transmitted through the λ/4 plate and the light attenuating filter to form the aerial image.

2. The display device according to claim 1, wherein the light attenuating filter is an ND filter.

3. The display device according to claim 1 or 2, wherein the λ/4 plate and the light attenuating filter are laminated on the surface of the retroreflecting member.

4. The display device according to one of claims 1 to 3, wherein the light attenuating filter is attached to an upper surface or a lower surface of the λ/4 plate.

5. A display device capable of displaying an aerial image by using retroreflection, the display device comprising:
a light source;
a half mirror arranged at a position on which light from the light source is incident;
a retroreflecting member; and
a polarizing plate arranged on a surface of the retroreflecting member, wherein
the retroreflecting member is configured to receive light reflected by the half mirror and transmitted through the polarizing plate, and
the half mirror is configured to transmit light retroreflected by the retroreflecting member and transmitted through the polarizing plate to form the aerial image.
